# EUROPEAN PATENT APPLICATION

(11) **EP 4 548 778 A1**
(43) Date of publication of application: **07.05.2025**
(21) Application number: 23831916.4
(22) Date of filing: 29.06.2023
(51) Int. Cl.: A23L 27/30, A23L 29/30, B65D 85/72

(54) **ALLULOSE COMPOSITION WITH EXCELLENT STABILITY**

(30) Priority: 29.06.2022 KR 20220079917
(71) Applicant: Samyang Corporation, Jongno-gu Seoul 03129 (KR)
(72) Inventor: KIM, Min Jeong, Yongin-si, Gyeonggi-do 16823 (KR); KIM, Go-Eun, Seongnam-si Gyeonggi-do 13434 (KR); SA, Soonok, Yongin-si, Gyeonggi-do 16923 (KR); HAN, Jung Sook, Anyang-si, Gyeonggi-do 14062 (KR)
(74) Representative: Schön, Christoph
(86) International application number: PCT/KR2023/009085
(87) International publication number: WO 2024/005558

(57) **Abstract**

The present application relates to an allulose composition with excellent stability.

## Description

### [TECHNICAL FIELD]

The present disclosure relates to an allulose composition with excellent stability.

### [BAKCGROUND ART]

Allulose is an epimer of D-fructose and is one kind of functional saccharides known as a rare sugar. It is known to have an effect on prevention and improvement of diabetes, since it has almost zero calories, while exhibiting a high sweetness of about 60 to 70% of sugar. In addition, allulose is known to have excellent solubility, and is one of materials attracting attention for use in food.

When allulose syrup is stored for a long period of time, allulose is converted into a different substance or decomposed, to lower the content of allulose. For example, allulose may be converted into difference saccharides such as fructose and the like, or a furfural-based substance such as HMF. Accordingly, as allulose syrup is decomposed, or converted into a different substance during a storage period, the allulose content is gradually reduced.

### [DISCLOSURE]

### [TECHNICAL PROBLEM]

An embodiment of the present disclosure relates to an allulose composition with excellent stability.

Another embodiment of the present disclosure relates to a method for increasing stability of allulose by controlling a dissolved oxygen concentration in an allulose composition.

### [TECHNICAL SOLUTION]

An embodiment of the present disclosure relates to an allulose composition with excellent stability. Specifically, the allulose composition according to an embodiment of the present disclosure may have a dissolved oxygen (DO) concentration of 8 ppm or less, to show an excellent storage stability.

Another embodiment of the present disclosure relates to a method for increasing stability of allulose by controlling a dissolved oxygen content of an allulose composition. Specifically, the method for increasing stability of allulose according to an embodiment of the present disclosure, may increase storage stability, by reducing dissolved oxygen (DO) concentration of an allulose composition. In the present disclosure, the storage stability of allulose means that characteristics of allulose or allulose syrup measured immediately after prepared or at the initial time of storage are maintained, or change in the characteristics is minimized during the storage period. The characteristics include an allulose content, pH, and/or a color value, and the like, but not limited thereto.

Hereinafter, the present invention will be described in more detail.

An embodiment of the present disclosure relates to an allulose composition comprising dissolved oxygen at a specific concentration or less. The allulose composition may have a minimized reduction rate of an allulose content during storage.

For example, the dissolved oxygen concentration of the allulose composition according to an embodiment of the present disclosure may be 10 ppm or less, 9.5 ppm or less, 9 ppm or less, 8.5 ppm or less, 8 ppm or less, 7.5 ppm or less, 7 ppm or less, 6.9 ppm or less, 6.8 ppm or less, 6.7 ppm or less, 6.6 ppm or less, 6.5 ppm or less, 6.4 ppm or less, 6.3 ppm or less, 6.2 ppm or less, 6.1 ppm or less, 6 ppm or less, 5.9 ppm or less, 5.8 ppm or less, 5.7 ppm or less, 5.6 ppm or less, 5.5 ppm or less, 5.4 ppm or less, 5.3 ppm or less, 5.2 ppm or less, 5.1 ppm or less, 5 ppm or less, 4.9 ppm or less, 4.8 ppm or less, 4.7 ppm or less, 4.6 ppm or less, 4.5 ppm or less, 4.4 ppm or less, 4.3 ppm or less, 4.2 ppm or less, 4.1 ppm or less, 4 ppm or less, 3.9 ppm or less, 3.8 ppm or less, 3.7 ppm or less, 3.6 ppm or less, 3.5 ppm or less, 3.4 ppm or less, 3.3 ppm or less, 3.2 ppm or less, 3.1 ppm or less, 3 ppm or less, 2.9 ppm or less, 2.8 ppm or less, 2.7 ppm or less, 2.6 ppm or less, 2.5 ppm or less, 2.4 ppm or less, 2.3 ppm or less, 2.2 ppm or less, 2.1 ppm or less, 2 ppm or less, 1.9 ppm or less, 1.8 ppm or less, 1.7 ppm or less, 1.6 ppm or less, or 1.5 ppm or less.

For example, the oxygen saturation rate of the allulose composition according to an embodiment of the present disclosure may be 90%sat or less, 89%sat or less, 88%sat or less, 87%sat or less, 86%sat or less, 85%sat or less, 84%sat or less, 83%sat or less, 82%sat or less, 81 %sat or less, 80%sat or less, 79%sat or less, 78%sat or less, 77%sat or less, 76%sat or less, 75%sat or less, 74%sat or less, 73%sat or less, 72%sat or less, 71%sat or less, 70%sat or less, 69%sat or less, 68%sat or less, 67%sat or less, 66%sat or less, 65%sat or less, 64%sat or less, 63%sat or less, 62%sat or less, 61 %sat or less, 60%sat or less, 59%sat or less, 58%sat or less, 57%sat or less, 56%sat or less, 55%sat or less, 54%sat or less, 53%sat or less, 52%sat or less, 51 %sat or less, 50%sat or less, 49%sat or less, 48%sat or less, 47%sat or less, 46%sat or less, 45%sat or less, 44%sat or less, 43%sat or less, 42%sat or less, 41 %sat or less, 40%sat or less, 39%sat or less, 38%sat or less, 37%sat or less, 36%sat or less, 35%sat or less, 34%sat or less, 33%sat or less, 32%sat or less, 31 %sat or less, 30%sat or less, 29%sat or less, 28%sat or less, 27%sat or less, 26%sat or less, 25%sat or less, 24%sat or less, 23%sat or less, 22%sat or less, 21%sat or less, or 20%sat or less. The oxygen saturation rate is an oxygen saturation degree of an allulose composition, as represented on the basis of 100% of oxygen saturation degree in air. The oxygen saturation degree in air may be for example, 15%, 16%, 17%, 18%, 19%, 20%, 21%, 22%, 23%, 24%, or 25%.

The dissolved oxygen concentration or the oxygen saturation rate may be measured under a room temperature (20 to 30°C, for example, 24.5°C) condition.

An embodiment of the present disclosure can provide an allulose composition in which the allulose content measured immediately after preparation is maintained at maximum under a storage condition such as storage and distribution, as the storage stability of allulose composition is enhanced. In the present disclosure, the storage stability of the allulose composition may refer to that the allulose content of the allulose composition is the same as that measured immediately after preparation, or refer to that reduction in the allulose content is minimized.

For example, based on 100% by weight of the solid content of allulose measured immediately after preparation of an allulose composition or at the initiation time of storage, the reduction rate of the allulose solid content is close to 0% during the storage period, and for example the reduction rate of the allulose content may be 10% or less, 9% or less, 8% or less, 7% or less, 6.5% or less, 6.3% or less, 6% or less, 5% or less, 4.5% or less, 4% or less, 3.5% or less, 3% or less, 2.5% or less, 2% or less, 1.9% or less, 1.8% or less, 1.7% or less, 1.6% or less, 1.5% or less, 1.4% or less, 1.3% or less, 1.2% or less, 1.1 % or less, 1% or less, 0.9% or less, 0.8% or less, 0.7% or less, 0.6% or less, 0.5% or less, 0.4% or less, 0.3% or less, 0.2% or less, or 0.1 % or less. As an example, the reduction rate of the allulose content may be referred to a reduction rate of the allulose content, specifically, the allulose solid content (e.g., weight) contained in allulose syrup based on 100% of the allulose content measured immediately after preparation of allulose syrup or at the initiation point of storage, as measured after stored at a temperature of 45°C for 7 days, or after stored at a temperature of 35°C for 4 weeks.

As an example, the allulose composition according to an embodiment of the present disclosure, may have a dissolved oxygen concentration of 8 ppm or less and 5% or less of a reduction rate of allulose content after stored at a the temperature of 45°C for 7 days, a dissolved oxygen concentration of 6.7 ppm or less and 1.4 % or less of a reduction rate of allulose content after stored at a the temperature of 45°C for 7 days, a dissolved oxygen concentration of 6 ppm or less and 1.1 % or less of a reduction rate of allulose content after stored at a the temperature of 45°C for 7 days, or a dissolved oxygen concentration of 4.3 ppm or less and 1.0 % or less of a reduction rate of allulose content after stored at a the temperature of 45°C for 7 days

As an example, the allulose composition according to an embodiment of the present disclosure, may have a dissolved oxygen concentration of 8 ppm or less and 10% or less of a reduction rate of allulose content after stored at a the temperature of 35°C for 4 weeks, a dissolved oxygen concentration of 6.7 ppm or less and 6.5 % or less of a reduction rate of allulose content after stored at a the temperature of 35°C for 4 weeks, a dissolved oxygen concentration of 5 ppm or less and 6.3 % or less of a reduction rate of allulose content after stored at a the temperature of 35°C for 4 weeks, or a dissolved oxygen concentration of 3.9 ppm or less and 6 % or less of a reduction rate of allulose content after stored at a the temperature of 35°C for 4 weeks.

The allulose composition according to an embodiment of the present disclosure has enhanced storage stability, and thus, the pH of allulose composition under a storage condition such as storage and distribution may be the same as that measured immediately after preparation, or pH reduction may be minimized.

Accordingly, pH reduction may be prevented in the allulose composition according to an embodiment of the present disclosure. For example, based on pH immediately after preparation of the allulose composition or at the initiation point of storage, the difference in the reduced pH after the allulose composition being stored at a temperature of 35°C for 4 weeks may be 1 or less, 0.9 or less, 0.85 or less, 0.8 or less, 0.75 or less, 0.7 or less, 0.65 or less, 0.6 or less, or 0.55 or less. As an example, the allulose composition according to an embodiment of the present disclosure, may have a dissolved oxygen concentration of 8 ppm or less and 1 or less of the difference in the reduced pH after stored at a temperature of 35°C for 4 weeks, a dissolved oxygen concentration of 6.7 ppm or less and 0.83 or less of the difference in the reduced pH after stored at a temperature of 35°C for 4 weeks, a dissolved oxygen concentration of 5 ppm or less and 0.7 or less of the difference in the reduced pH after stored at a temperature of 35°C for 4 weeks, or a dissolved oxygen concentration of 3.9 ppm or less and 0.65 or less of the difference in the reduced pH after stored at a temperature of 35°C for 4 weeks.

As allulose decomposition is accelerated at low pH, pH is a very important factor for the allulose content stability. As the allulose syrup according to an embodiment of the present invention has a very small difference in decreased pH during a storage period, the allulose content can be maintained at maximum.

The allulose composition according to an embodiment of the present disclosure has enhanced storage stability, so the color value of allulose composition under a storage condition such as storage and distribution may be the same as that measured immediately after preparation, or a color value increase (e.g., browning) may be minimized.

Accordingly, in the allulose composition according to an embodiment of the present disclosure, the browning may be prevented. For example, based on the color value measured immediately after preparation of the allulose composition or at the initiation time of storage, the increase rate of color value after stored at a temperature of 35°C for 4 weeks may be 250% or less, 240% or less, 230% or less, 225% or less, 220% or less, 210% or less, 205% or less, 200% or less, 190% or less, 185% or less, 180% or less, 175% or less, 170% or less, 165% or less, 160% or less, 155% or less, 150% or less, 145% or less, 140% or less, 135% or less, 130% or less, 125% or less, 120% or less, 115% or less, or 110% or less.

The allulose composition according to an embodiment of the present disclosure may be in a liquid or syrup form. The solid content of liquid allulose composition or allulose syrup may be for example, 30 Brix or more, 40 Brix or more, 50 Brix or more, 60 Brix or more, more than 60 Brix, or 64 Brix or more. As an example, the solid content of the allulose liquid composition or allulose syrup may be 30 to 99 Brix, 30 to 95 Brix, 30 to 90 Brix, 30 to 85 Brix, 30 to 80 Brix, 30 to 75 Brix, 30 Brix or more and less than 73 Brix, 30 to 70 Brix, 30 to 69 Brix, 30 to 68 Brix, 40 to 99 Brix, 40 to 95 Brix, 40 to 90 Brix, 40 to 85 Brix, 40 to 80 Brix, 40 Brix or more and less than 73 Brix, 40 to 75 Brix, 40 to 70 Brix, 40 to 69 Brix, 40 to 68 Brix, 50 to 99 Brix, 50 to 95 Brix, 50 to 90 Brix, 50 to 85 Brix, 50 to 80 Brix, 50 to 75 Brix, 50 Brix or more and less than 73 Brix, 50 to 70 Brix, 50 to 69 Brix, 50 to 68 Brix, 60 to 99 Brix, 60 to 95 Brix, 60 to 90 Brix, 60 to 85 Brix, 60 to 80 Brix, 60 to 75 Brix, 60 Brix or more and less than 73 Brix, 60 to 70 Brix, 60 to 69 Brix, 60 to 68 Brix, more than 60 and 99 Brix or less, more than 60 and 95 Brix or less, more than 60 and 90 Brix or less, more than 60 and 85 Brix or less, more than 60 and 80 Brix or less, more than 60 and 75 Brix or less, more than 60 and less than 73 Brix, more than 60 and 70 Brix or less, more than 60 and 69 Brix or less, more than 60 and 68 Brix or less, 64 to 99 Brix, 64 to 95 Brix, 64 to 90 Brix, 64 to 85 Brix, 64 to 80 Brix, 64 to 75 Brix, 64 Brix or more and less than 73 Brix, 64 to 70 Brix, 64 to 69 Brix, or 64 to 68 Brix.

The allulose liquid composition or the allulose syrup may include allulose of 0.1% by weight or more, 3% by weight or more, 5% by weight or more, 10% by weight or more, 20% by weight or more, 30% by weight or more, 40% by weight or more, 50% by weight or more, 60% by weight or more, or As an example, 0.1 to 100% by weight, based on 100% by weight of the solid content. For example, based on 100% by weight of the solid content, it may be low-purity allulose syrup including 1 to 50% by weight, 3 to 35% by weight, 3 to 25% by weight, 3 to 20% by weight, 5 to 35% by weight, 5 to 25% by weight, or 5 to 20% by weight, or high-purity allulose solution including at a content of 70% by weight or more, 75% by weight or more, 80% by weight or more, 85% by weight or more, 90% by weight or more, 95% by weight or more, 96% by weight or more, 97% by weight or more, or 98% by weight or more.

The viscosity of the allulose syrup may be 2 cps to 200 cps at a temperature of 45°C, and the electrical conductivity may be 1000 uS/cm or less, for example, 0.01 to 1000 uS/cm, 200 uS/cm or less, 150 uS/cm or less, 100 uS/cm or less, 80 uS/cm or less, 50 uS/cm or less, 30 uS/cm or less, for example, 0.1 to 200 uS/cm, 0.1 to 150 uS/cm, 0.1 to 100 uS/cm, 0.1 to 0.1 to 80 uS/cm, 0.1 to 50 uS/cm, or 0.1 to 30 uS/cm.

In the allulose syrup according to an embodiment of the present disclosure, the pH at the initiation point of storage may be 2.8 or more, or 5.5 or less. For example, it may be 2.8 to 5.5, 3.8 to 5.5, 3.9 to 5.5, 4.0 to 5.5, 4.1 to 5.5, 4.2 to 5.5, 4.3 to 5.5, 4.4 to 5.5, 4.5 to 5.5, 4.6 to 5.5, 4.7 to 5.5, or 4.8 to 5.5.

In a specific embodiment, the allulose syrup may be obtained by a method for preparation including activated carbon treatment, SMB chromatography high-purity separation, and an ion-purification process, for a biologically obtained allulose-containing solution, and selectively, a process of concentrating allulose syrup treated by the purification process may be further performed, or an ion-purification process may be further performed before performing high-purity separation after conducting an activated carbon treatment process of the allulose-containing solution. The ion-purification process performed after the activated carbon treatment process, may be same or different from the ion-purification process performed after the high-purity separation process, and an ion exchange resin is not particularly limited.

The biologically obtained allulose-containing solution may be produced by culturing a microorganism producing allulose epimerase or a recombinant microorganism in which a gene encoding allulose epimerase is introduced, and reacting the microorganism producing allulose epimerase or allulose epimerase obtained therefrom with a fructose-containing raw material. The allulose epimerase may be performed by a liquid reaction or a solid reaction using immobilized enzyme. One example of an allulose conversion reaction is described in Korean Patent No. 10-1318422 and the like.

The allulose-containing solution was separated into allulose fractions with a higher allulose content than a conversion reactant and fructose raffinate, by performing SMB chromatography separation, and the allulose fractions may be prepared as allulose syrup products by performing an ion-purification process, or may be prepared as concentrated products by performing a concentration process additionally. It may comprise separation/purification so that the content of allulose in the allulose fractions is 85% by weight or more, for example, 85 % by weight to 95 %(w/w) or more.

Other embodiment of the present disclosure relates to an allulose storage package, comprising the allulose composition according to an embodiment of the present disclosure, and a storage container. As the package is sealed, the dissolved oxygen concentration of the allulose composition may not change or the change in the dissolved oxygen concentration may be minimized.

A storage container of allulose applicable for the present disclosure includes a container body in which a storage space is formed inside thereof and an inlet connected to the storage space is formed, and includes a cover member that is detachably connected to the inlet of the container body and seals the storage space. The shape or form of the container is not particularly limited.

The storage container may be made from metal, metal alloy, or polymer material. In case of a metal or metal alloy material is used, the inner surface of the container is coated with a polymer, so that it may be preferable to minimize direct contact with allulose syrup. Coating of the inner surface of the container is preferably coating the entire surface in inside container, and the coating includes single coating, double or multiple coating having three coatings or more. It may be multiple coating of twice or more so as to minimize direct contact of allulose syrup with metal or metal alloy material. The metal or metal alloy material is not particularly limited as long as it is a material usable for a food container, and for example, the container may be tin or a tin alloy material. The coating agent on the inner surface of the container is not particularly limited as long as it is a material usable for a food container, and for example, it may be an epoxyphenol-based resin usable for a food container, and the inner surface of the container may include a coating layer of the epoxyphenol-based resin, and specifically, it may be a commercially available product, Canguard 5K-872 (product name).

Another embodiment of the present disclosure, relates to a method for increasing stability of allulose, comprising adjusting dissolved oxygen of an allulose composition.

Further embodiment of the present disclosure relates to a method for preventing browning of allulose, comprising adjusting dissolved oxygen (DO) of an allulose composition.

Other embodiment of the present disclosure relates to a method for preparation of an allulose composition, comprising obtaining a raw allulose composition by converting allulose from fructose and adjusting dissolved oxygen of the raw allulose composition.

The adjusting dissolved oxygen may be to reduce dissolved oxygen. The reduction of dissolved oxygen may be removing dissolved oxygen of an allulose composition, or preventing an increase of dissolved oxygen in an allulose composition.

The adjusting dissolved oxygen, may comprise at least one selected from the following (1) to (5):
(1) treating an allulose composition with a deoxidant;
(2) packaging an allulose composition with a selectively permeable packaging material;
(3) performing inert gas substitution;
(4) vacuum deaeration; and
(5) adjusting, for example, reducing a head space of a container in which the allulose composition is contained.

The selectively permeable packaging material may be a packaging material that does not permeate oxygen.

The performing inert gas substitution is substituting dissolved oxygen in the allulose composition with inert gas. The inert gas means gas that does not decrease allulose content, or gas having a low degree of decreasing allulose content compared to oxygen.

The adjusting dissolved oxygen, may be controlling a dissolved oxygen concentration of the allulose composition to 8 ppm or less, or an oxygen saturation degree to 90%sat or less.

### [ADVANTAGEOUS EFFECTS]

The allulose composition according to an embodiment of the present disclosure has high maintenance rate of allulose content and has excellent storage stability because it contains a dissolved oxygen concentration at a specific range. Therefore, even if allulose syrup is stored and distributed for a long period of time, decomposition or conversion of allulose is prevented, thereby minimizing a decrease in an allulose content.

### [BRIEF DESCRIPTION OF THE DRAWINGS]

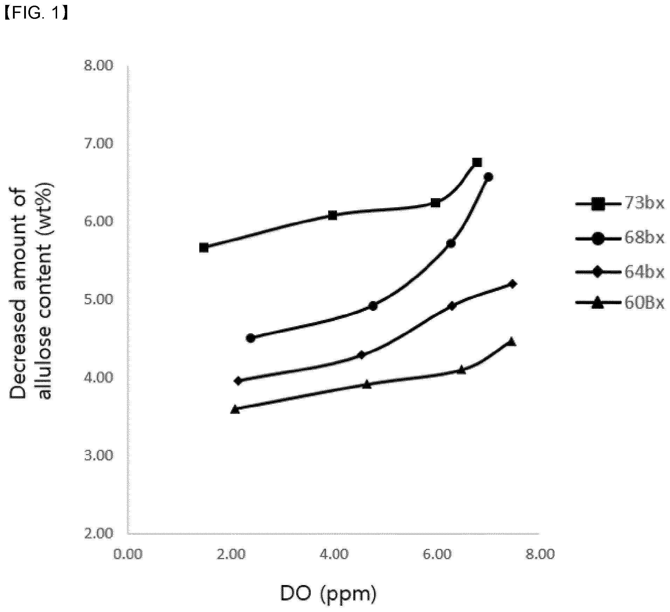

FIG. 1 is a drawing which shows the change rate in an allulose content after storing the allulose composition according to an embodiment of the present disclosure at a temperature of 35°C for 4 weeks.

### [MODE FOR INVENTION]

Hereinafter, the present disclosure will be described in more detail by the following examples. However, these examples are intended to illustrate the present disclosure only, but the scope of the present disclosure is not limited by these examples.

### Example 1: Stability of allulose syrup depending on dissolved oxygen concentration (1)

In order to investigate an effect of a dissolved oxygen concentration of allulose syrup on stability of an allulose content, allulose syrup samples with different dissolved oxygen concentrations were stored under a strict condition for 7 days, and then changes in the allulose content were measured.

Specifically, allulose syrup (liquid sample) with allulose purity of 98 wt/wt%, pH 4.1 and a solid content of 60 brix was added in a sample container made of polyethylene with a capacity of 500ml, and the allulose syrup was stirred to adjust the dissolved oxygen concentration. The stirring rate was varied by 150-200rpm, and the stirring time was varied by 0 second to 30 seconds, thereby measuring dissolved oxygen concentration in real time with a DO meter (Hanna edge Do meter).The saturated dissolved oxygen concentration of 10-20% could be adjusted only by ventilation without stirring, and higher values were adjusted by varying the stirring rate and stirring time, and when the saturated dissolved oxygen concentration reached a certain value, it was immediately sealed so that the dissolved oxygen concentration could be maintained. The dissolved oxygen concentrations of 4 kinds of the prepared allulose syrups were shown in Table 1.

An acceleration test was conducted with storing each allulose syrup sample at a temperature of 45°C, and in 7 days after storage, each sample was collected in a small amount, and was diluted to 3 brix by adding water to prepare analysis samples. The allulose content of the analysis samples was measured by HPLC analysis. Specific HPLC analysis conditions were performed using an 87C (Biorad HPX-87C, 7.8mm Φ x 300mm) column at a temperature of 80°C, by flowing 100% of water as a mobile phase at a flow rate of 0.6 ml/min, and it was detected using RI detector. In Table 1, the allulose content is represented as an allulose content on the basis of 100% by weight of the solid content of the allulose syrup.

**[Table 1]**

| Sample name | Solid content (bx) | Dissolved oxygen concentration (%sat) | Dissolved oxygen concentratio n (ppm) | Initial allulose content (wt%) | Allulose content after storage (wt%) | Decreased amount of allulose content (wt%) | Change rate of Allulose content (%) |
|---|---|---|---|---|---|---|---|
| Example 1-1 | 60 | 83.5 | 7.05 | 98.20 | 96.5 | -1.7 | -1.73 |
| Example 1-2 | 60 | 73.0 | 6.14 | 98.20 | 97.0 | -1.2 | -1.22 |
| Example 1-3 | 60 | 55.0 | 4.70 | 98.20 | 97.2 | -1.0 | -1.02 |
| Example 1-4 | 60 | 28.6 | 2.37 | 98.20 | 97.9 | -0.3 | -0.31 |

### Example 2: Stability of allulose syrup depending on dissolved oxygen concentration (2)

Using allulose syrup with allulose purity of 98 wt/wt%, pH 4.1 and a solid content of 64 Brix, the test was performed according to the substantially same method as Example 1, and the difference in allulose content and change rate of the allulose content depending on a dissolved oxygen concentration were shown in Table 2.

**[Table 2]**

| Sample name | Solid content (bx) | Dissolved oxygen concentration (%sat) | Dissolved oxygen concentration (ppm) | Initial allulose content (wt%) | Allulose content after storage (wt%) | Decreased amount of allulose content (wt%) | Change rate of Allulose content(%) |
|---|---|---|---|---|---|---|---|
| Example 2-1 | 64 | 83.0 | 7.02 | 98.20 | 96.6 | -1.6 | -1.63 |
| Example 2-2 | 64 | 72.5 | 6.13 | 98.20 | 97.1 | -1.1 | -1.12 |
| Example 2-3 | 64 | 52.5 | 4.38 | 98.20 | 97.2 | -1.0 | -1.02 |
| Example 2-4 | 64 | 26.2 | 2.18 | 98.20 | 97.5 | -0.7 | -0.71 |

### Example 3: Stability of allulose syrup depending on dissolved oxygen concentration (3)

Using allulose syrup with allulose purity of 98 wt/wt%, pH 4.1 and a solid content of 68 Brix, the test was performed according to the substantially same method as Example 1, and the difference in allulose content and change rate of the allulose content depending on a dissolved oxygen concentration were shown in Table 3.

**[Table 3]**

| Sample name | Solid content (bx) | Dissolved oxygen concentration (%sat) | Dissolved oxygen concentration (ppm) | Initial allulose content (wt%) | Allulose content after storage (wt%) | Decreased amount of allulose content (wt%) | Change rate of Allulose content(%) |
|---|---|---|---|---|---|---|---|
| Example 3-1 | 68 | 82.5 | 6.98 | 98.2 | 96.6 | -1.6 | -1.63 |
| Example 3-2 | 68 | 71.6 | 6.06 | 98.2 | 97.1 | -1.1 | -1.12 |
| Example 3-3 | 68 | 50.3 | 4.2 | 98.2 | 97.4 | -0.8 | -0.81 |
| Example 3-4 | 68 | 23.5 | 1.9 | 98.2 | 97.8 | -0.4 | -0.41 |

### Example 4: Stability of allulose syrup depending on dissolved oxygen concentration (4)

Using allulose syrup with allulose purity of 98 wt/wt%, pH 4.1 and a solid content of 73 Brix, the test was performed according to the substantially same method as Example 1, and the difference in allulose content and the change rate of the allulose content depending on a dissolved oxygen concentration were shown in Table 4.

**[Table 4]**

| Sample name | Solid content (bx) | Dissolved oxygen concentrati on (%sat) | Dissolved oxygen concentration (ppm) | Initial allulose content (wt%) | Allulose content after storage (wt%) | Decreased amount of allulose content (wt%) | Change rate of Allulose content (%) |
|---|---|---|---|---|---|---|---|
| Example 4-1 | 73 | 80 | 6.78 | 98.2 | 96.8 | -1.4 | -1.43 |
| Example 4-2 | 73 | 70.5 | 5.95 | 98.2 | 97.4 | -0.8 | -0.81 |
| Example 4-3 | 73 | 49.5 | 4.11 | 98.2 | 97.6 | -0.6 | -0.61 |
| Example 4-4 | 73 | 19.1 | 1.5 | 98.2 | 97.7 | -0.5 | -0.51 |

As shown in Table 1 to Table 4, the allulose loss rate was lower, as the dissolved oxygen concentration of the allulose syrup was reduced. Specifically, when stored at a temperature of 45°C for 7 days, the allulose content reduction rate of the allulose syrup with a dissolved oxygen concentration of 8 ppm or less, or an oxygen saturation rate of 90%sat or less was 5% or less, and the storage stability of the allulose syrup was significantly excellent.

### Example 5: Stability of allulose syrup depending on dissolved oxygen concentration when stored for a long period of time (1)

In order to investigate an effect of a dissolved oxygen concentration on stability of an allulose content when allulose syrup is stored for a long period of time, allulose syrup samples with different dissolved oxygen concentrations were stored for 4 weeks, and then changes in the allulose content were measured.

Specifically, allulose syrup with allulose purity of 97% or more, pH 4.15 and a solid content of 60 Brix was prepared, and a dissolved oxygen concentration was adjusted by the same method as Example 1. Then, after each sample was stored at a temperature of 35°C for 4 weeks, the allulose content was measured and the allulose content change rate was calculated and shown in Table 5 and FIG. 1. In Table 5, the allulose content is represented as an allulose content on the basis of 100% by weight of the solid content of the allulose syrup.

**[Table 5]**

| Sample name | Solid content (bx) | Dissolved oxygen concentratio n (%sat) | Dissolved oxygen concentrati on (ppm) | Initial allulose content (wt%) | Allulose content after storage (wt%) | Decreased amount of allulose content (wt%) | Change rate of Allulose content (%) |
|---|---|---|---|---|---|---|---|
| Example 5-1 | 60 | 87.8 | 7.44 | 98.20 | 93.7 | -4.47 | -4.55 |
| Example 5-2 | 60 | 76.7 | 6.48 | 98.20 | 94.1 | -4.10 | -4.18 |
| Example 5-3 | 60 | 55.3 | 4.64 | 98.20 | 94.3 | -3.92 | -3.99 |
| Example 5-4 | 60 | 25.6 | 2.09 | 98.20 | 94.6 | -3.60 | -3.67 |

### Example 6: Stability of allulose syrup depending on dissolved oxygen concentration when stored for a long period of time (2)

Using allulose syrup with allulose purity of 97% or more, pH 4.15 and a solid content of 64 Brix, the test was performed according to the substantially same method as Example 5, the allulose content change amount and change rate depending on the dissolved oxygen concentration were shown in Table 6 and FIG. 1. In Table 6, the allulose content is represented as an allulose content on the basis of 100% by weight of the solid content of the allulose syrup.

**[Table 6]**

| Sample name | Solid content (bx) | Dissolved oxygen concentrati on (%sat) | Dissolved oxygen concentrati on (ppm) | Initial allulose content (wt%) | Allulose content after storage (wt%) | Decreased amount of allulose content (wt%) | Change rate of Allulose content (%) |
|---|---|---|---|---|---|---|---|
| Example 6-1 | 64 | 88.2 | 7.47 | 98.20 | 93.0 | -5.20 | -5.29 |
| Example 6-2 | 64 | 74.5 | 6.29 | 98.20 | 93.3 | -4.92 | -5.01 |
| Example 6-3 | 64 | 54.1 | 4.54 | 98.20 | 93.9 | -4.29 | -4.37 |
| Example 6-4 | 64 | 26.1 | 2.14 | 98.20 | 94.2 | -3.97 | -4.04 |

### Example 7: Stability of allulose syrup depending on dissolved oxygen concentration when stored for a long period of time (3)

Using allulose syrup with allulose purity of 97% or more, pH 4.15 and a solid content of 68 Brix, the test was performed according to the substantially same method as Example 5, the change amount of allulose content and change rate depending on the dissolved oxygen concentration were shown in Table 7 and FIG. 1. In Table 7, the allulose content is represented as an allulose content on the basis of 100% by weight of the solid content of the allulose syrup.

**[Table 7]**

| Sample name | Solid content (bx) | Dissolved oxygen concentrati on (%sat) | Dissolved oxygen concentrati on (ppm) | Initial allulose content (wt%) | Allulose content after storage (wt%) | Decreased amount of allulose content (wt%) | Change rate of Allulose content (%) |
|---|---|---|---|---|---|---|---|
| Example 7-1 | 68 | 82.9 | 7.01 | 98.20 | 91.6 | -6.57 | -6.69 |
| Example 7-2 | 68 | 74.2 | 6.27 | 98.20 | 92.5 | -5.72 | -5.82 |
| Example 7-3 | 68 | 56.7 | 4.76 | 98.20 | 93.3 | -4.92 | -5.01 |
| Example 7-4 | 68 | 29.1 | 2.39 | 98.20 | 93.7 | -4.50 | -4.58 |

### Example 8: Stability of allulose syrup depending on dissolved oxygen concentration when stored for a long period of time (4)

Using allulose syrup with allulose purity of 97% or more, pH 4.15 and a solid content of 73 Brix, the test was performed according to the substantially same method as Example 5, the allulose content change amount and change rate depending on the dissolved oxygen concentration were shown in Table 8 and FIG. 1. In Table 8, the allulose content is represented as an allulose content on the basis of 100% by weight of the solid content of the allulose syrup.

**[Table 8]**

| Sample name | Solid content (bx) | Dissolved oxygen concentratio n (%sat) | Dissolved oxygen concentrat ion (ppm) | Initial allulose content (wt%) | Allulose content after storage (wt%) | Decreased amount of allulose content (wt%) | Change rate of Allulose content (%) |
|---|---|---|---|---|---|---|---|
| Example 8-1 | 73 | 80.3 | 6.79 | 98.20 | 91.4 | -6.76 | -6.89 |
| Example 8-2 | 73 | 70.9 | 5.98 | 98.20 | 92.0 | -6.24 | -6.36 |
| Example 8-3 | 73 | 47.5 | 3.97 | 98.20 | 92.1 | -6.08 | -6.19 |
| Example 8-4 | 73 | 18.5 | 1.48 | 98.20 | 92.5 | -5.66 | -5.77 |

As shown in Table 5 to Table 8, the lower the dissolved oxygen concentration of allulose syrup, the lower the allulose loss rate. Specifically, when stored at a temperature of 35°C for 4 weeks, the allulose content reduction rate of allulose syrup with a dissolved oxygen concentration of 8 ppm or less or an oxygen saturation rate of 90%sat or less was 10% or less, and the storage stability of the allulose syrup was significantly excellent. In particular, as shown in FIG. 1, the change in the allulose content caused by the dissolved oxygen concentration was shown as significant in allulose syrup with 64 Brix or more.

Therefore, quality deterioration that an allulose content is reduced during a shelf life can be prevented by adjusting a dissolved oxygen concentration in allulose syrup, and allulose syrup with an excellent effect of maintaining an allulose content and high stability can be provided.

### Example 9: pH stability of allulose syrup depending on dissolved oxygen concentration

pH was measured immediately after preparing samples for the allulose syrup of Examples 5 to 8, and after stored at a temperature of 35°C for 4 weeks. The difference in pH value was calculated and shown in Table 9.

**[Table 9]**

| Sample name | Solid content (bx) | Dissolved oxygen concentration (%sat) | Dissolved oxygen concentration (ppm) | Initial pH | pH after storage | pH difference |
|---|---|---|---|---|---|---|
| Example 5-1 | 60 | 87.8 | 7.44 | 4.15 | 3.32 | -0.83 |
| Example 5-2 | 60 | 76.7 | 6.48 | 4.15 | 3.36 | -0.79 |
| Example 5-3 | 60 | 55.3 | 4.64 | 4.15 | 3.48 | -0.67 |
| Example 5-4 | 60 | 25.6 | 2.09 | 4.15 | 3.50 | -0.65 |
| Example 6-1 | 64 | 88.2 | 7.47 | 4.15 | 3.30 | -0.85 |
| Example 6-2 | 64 | 74.5 | 6.29 | 4.15 | 3.32 | -0.83 |
| Example 6-3 | 64 | 54.1 | 4.54 | 4.15 | 3.46 | -0.69 |
| Example 6-4 | 64 | 26.1 | 2.14 | 4.15 | 3.51 | -0.64 |
| Example 7-1 | 68 | 82.9 | 7.01 | 4.15 | 3.42 | -0.73 |
| Example 7-2 | 68 | 74.2 | 6.27 | 4.15 | 3.48 | -0.67 |
| Example 7-3 | 68 | 56.7 | 4.76 | 4.15 | 3.50 | -0.65 |
| Example 7-4 | 68 | 29.1 | 2.39 | 4.15 | 3.53 | -0.62 |
| Example 8-1 | 73 | 80.3 | 6.79 | 4.15 | 3.51 | -0.64 |
| Example 8-2 | 73 | 70.9 | 5.98 | 4.15 | 3.55 | -0.60 |
| Example 8-3 | 73 | 47.5 | 3.97 | 4.15 | 3.58 | -0.57 |
| Example 8-4 | 73 | 18.5 | 1.48 | 4.15 | 3.62 | -0.53 |

As shown in Table 9, the lower the dissolved oxygen concentration was, the lower the pH decrease was. Specifically, when stored at a temperature of 35°C for 4 weeks, the difference of pH reduction of the allulose syrup which had a dissolved oxygen concentration of 8 ppm or less or an oxygen saturation rate of 90%sat or less was 1 or less, and the pH stability of the allulose syrup was notably excellent.

### Example 10: Color value stability of allulose syrup depending on dissolved oxygen concentration

The color value was measured Immediately after preparing samples for the allulose syrup of Examples 5 to 8, and after storing it at a temperature of 35°C for 4 weeks. The color value change rate was calculated and shown in Table 10. The color value was measured at 420 nm using a 1cm quartz cell using a spectrophotometer (SHIMADZU), after diluting the allulose syrup to 30bx.

**[Table 10]**

| Sample name | Solid content (bx) | Dissolved oxygen concentration (%sat) | Dissolved oxygen concentration (ppm) | Initial color value | Color value after storage | Color value change rate (%) |
|---|---|---|---|---|---|---|
| Example 5-1 | 60 | 87.8 | 7.44 | 0.015 | 0.038 | 153.33 |
| Example 5-2 | 60 | 76.7 | 6.48 | 0.015 | 0.037 | 146.67 |
| Example 5-3 | 60 | 55.3 | 4.64 | 0.015 | 0.033 | 120.00 |
| Example 5-4 | 60 | 25.6 | 2.09 | 0.015 | 0.031 | 106.67 |
| Example 6-1 | 64 | 88.2 | 7.47 | 0.015 | 0.039 | 160.00 |
| Example 6-2 | 64 | 74.5 | 6.29 | 0.015 | 0.037 | 146.67 |
| Example 6-3 | 64 | 54.1 | 4.54 | 0.015 | 0.035 | 133.33 |
| Example 6-4 | 64 | 26.1 | 2.14 | 0.015 | 0.032 | 113.33 |
| Example 7-1 | 68 | 82.9 | 7.01 | 0.015 | 0.049 | 226.67 |
| Example 7-2 | 68 | 74.2 | 6.27 | 0.015 | 0.046 | 206.67 |
| Example 7-3 | 68 | 56.7 | 4.76 | 0.015 | 0.043 | 186.67 |
| Example 7-4 | 68 | 29.1 | 2.39 | 0.015 | 0.040 | 166.67 |
| Example 8-1 | 73 | 80.3 | 6.79 | 0.015 | 0.050 | 233.33 |
| Example 8-2 | 73 | 70.9 | 5.98 | 0.015 | 0.047 | 213.33 |
| Example 8-3 | 73 | 47.5 | 3.97 | 0.015 | 0.045 | 200.00 |
| Example 8-4 | 73 | 18.5 | 1.48 | 0.015 | 0.042 | 180.00 |

As shown in Table 10, as the dissolved oxygen concentration was lower, the color value change rate was lower. That means that browning of allulose syrup can be prevented by adjusting the dissolved oxygen concentration of allulose syrup.

## Claims

1. A liquid allulose composition, comprising allulose and having a dissolved oxygen (DO) concentration of 8 ppm or less, or an oxygen saturation rate of 90%sat or less.

2. The composition according to claim 1, wherein the solid content of the composition is 30 to 99 Brix.

3. The composition according to claim 1, wherein the allulose content of the composition is 5 % by weight or more based on 100 % by weight of the total solid content of the composition.

4. The composition according to claim 1, wherein pH of the composition is 2.8 to 5.5.

5. The composition according to claim 1, wherein the composition has an allulose content reduction rate of 10% or less based on the allulose content at the initiation point of storage, after stored at a temperature of 45°C for 7 days.

6. The composition according to claim 1, wherein the composition has an allulose content reduction rate of 10% or less based on the allulose content at the initiation point of storage, after stored at a temperature of 35°C for 4 weeks

7. The composition according to claim 1, wherein the composition has a pH reduction value of 1 or less based on the pH at the initiation point of storage, after stored at a temperature of 35°C for 4 weeks.

8. The composition according to claim 1, wherein the composition has a color value increase rate of 250% or less based on the color value at the initiation point of storage, after stored at a temperature of 35°C for 4 weeks.

9. An allulose storage package, comprising the composition according to any one of claim 1 to claim 8 and a storage container.

10. The package according to claim 9, wherein the package is sealed.

11. A method for increasing stability of allulose, comprising reducing dissolved oxygen (DO) of an allulose composition.

12. The method according to claim 11, wherein the reducing dissolved oxygen, comprises at least one selected from the following (1) to (5):
(1) treating with a deoxidant;
(2) packaging with a selectively permeable packaging material;
(3) performing inert gas substitution;
(4) vacuum deaeration; and
(5) adjusting a head space of a container in which the allulose composition is comprised.

13. The method according to claim 11, wherein the reducing dissolved oxygen is, adjusting the dissolved oxygen concentration of the allulose composition to 8 ppm or less, or the oxygen saturation rate of the allulose composition to 90%sat or less.

14. A method for preventing browning of allulose, comprising reducing dissolved oxygen (DO) of an allulose composition.

15. A method for preparation of an allulose composition, comprising
obtaining an allulose composition by converting allulose from fructose; and
reducing dissolved oxygen (DO) of the allulose composition.

16. The method according to claim 15, wherein the reducing dissolved oxygen, comprises at least one selected from the following (1) to (5):
(1) treating a deoxidant;
(2) packaging with a selectively permeable packaging material;
(3) performing inert gas substitution;
(4) vacuum deaeration; and
(5) adjusting a head space of a container in which the allulose composition is comprised.

17. The method according to claim 15, wherein the reducing dissolved oxygen is, adjusting the dissolved oxygen concentration of the allulose composition to 8 ppm or less, or the oxygen saturation rate of the allulose composition to 90%sat or less.
